# EUROPEAN PATENT APPLICATION

(11) **EP 0 555 775 A1**
(43) Date of publication of application: **18.08.1993**
(21) Application number: 93101764.4
(22) Date of filing: 05.02.1993
(51) Int. Cl.: A47J 31/06

(54) **A drawer device with a non-rotating container/dispenser for espresso coffee apparatus**

(30) Priority: 14.02.1992 IT MI920324
(71) Applicant: DOMEL SA/AG, CH-6834 Morbio Inferiore (CH)
(72) Inventor: Siccardi, Alberto, I-20123 Milano (IT); Crimella, Marco, I-15100 Alessandria (IT); Poretti, Claudio, Ligornetto (CH)
(74) Representative: Zavattoni Gusmeroli, Maria Chiara

(57) **Abstract**

A drawer device, with a container-dispenser-filter holder for an espresso coffee apparatus, comprises a cylindrical control body (70) with sloping annular surfaces (74), provided with a handle (72), the body being able to be rotated for being raised or lowered onto correspondingly collaborating sloping surfaces (34) of a box structure (12) of the device; during the raising movement, the cylindrical body raises a container/filter-holder (40) in a non-rotating way against a facing fixed gasket (80), the said container (40) being thus subject to a linear movement without rotation.

The fixed gasket (80) is toric, having a lower circular groove (82) and an upper circular groove (84), to have a better seal on the upper edge (46') of the container.

The unit is particularly suitable for use with filter bags having a peripheral tab.

## Description

The present invention refers to a drawer device or sliding box, for an espresso coffee machine or apparatus, the said device comprising a container-dispenser-filter holder element.

The espresso coffee apparatus or machines known at present, for bars or domestic use, comprise a container-filter holder element which is circular in plan view, and is integral with a handle, which element, when filled with ground coffee, is fixed to a special seating of the machine by means of a bayonet type connection, which has inclined collaborating surfaces on the filter holder element and on the seating fixed to the structure of the apparatus. The element of course undergoes a rotation through a wide arc (about 90°) with respect to the seating, between the position in which it is applied to the apparatus and the position in which it is fixed to the same; in the said second position, boiling water can be dispensed for making a drink of coffee.

From a previous patent application container-filter holder elements are also known in which an inner gasket supports the filter and provides a peripheral support for the peripheral tab of a ground coffee filter-bag.

The use of pre-packed coffee filter-bags involves the risk of the bag moving back, under the violent action of the hot water, disclosing an easy way through for the hot water itself, which leads to weaker coffee being obtained; a second risk is that the peripheral tab of the bag lying on the gasket, may tear under rotary movement to which the container is subject with respect to the seating, resulting in coffee powder leaking out.

On the other hand, the use of pre-packed measured filter bags is becoming increasingly widespread, since it allows drinks of coffee to be obtained with constant characteristics, and it also avoids dirtying the filters and thereby avoids the subsequent manoeuvres which would be necessary for cleaning them, and the waste of time involved.

The aim of the present invention is to make the use of powdered coffee filter-bags possible and easy, without the drawbacks due to shifting or moving back of the bag during the drink preparation process, and without causing the bag itself to break.

These aims have been obtained with a drawer device with a container-filter holder according to claim 1. Further desirable features are described in the subsequent claims.

In other words, the device of the invention comprises a box-type slider or drawer structure, inside of which a container-filter holder is axially movable without rotation, between a lowered loading position and a raised working position.

The movement of the container-filter holder is determined by an independent cylindrical element, provided with a handle and rotatable around a vertical axis of the container-filter holder, the cylindrical element having sections of annular surface at the bottom, said sections sloping circumferentially, or having a descending height in an axial direction; the said surfaces collaborate with similar facing surfaces of a cylindrical ring integral with the box structure, in such a way as to determine the raising of the cylindrical element, and thence of the container-filter holder for rotation in one direction; the return of the same is determined by springs.

According to a preferred embodiment, a specially shaped gasket is foreseen for collaborating with the upper border of the container-filter holder. The gasket, which is fixed to the structure of the machine, comprises a lower groove with a U-shaped section and slightly widening sides, and an upper groove with a less deep U section and relatively wider, so that, when the upper edge of the filter holder engages the lower groove and presses slightly against the latter, the sides of the latter close onto the sides of the container-filter holder wall, achieving an excellent seal.

According to a further feature, the device has a refiner device downstream from the filter, for obtaining a more homogeneous cream coffee.

The new device can be used with coffee bags without the peripheral tab of such bags breaking, and giving an excellent locking of the peripheral tab of the bag itself; therefore a very good drink is obtained, with constant high quality.

The device, however, can also be used with loose ground coffee.

An embodiment of the invention will be described below with reference to the appended drawings, in which it is illustrated merely for the sake of example and not restrictively, and in which:
- figure 1: is a perspective view from below of the drawer device;
- figure 2: is a front elevational view of the device itself with the container in the raised position;
- figure 3: is an illustration of the device in partial section along an axial plane, the device being in the rest position, with the container in the lowered position;
- figure 4: is an illustration of the device similar to the one in figure 3 but in the working position with the container raised;
- figure 5: is a plan view of the container-filter holder element;
- figure 6: illustrates the filter holder and refiner device, in vertical section taken along 6-6 in figure 5;
- figure 7: is an enlarged plan view of the refiner device.

The device of the invention is shown as a whole with reference number 10.

It comprises a substantially box-shaped drawer structure 12, comprising vertical walls, 13, 14, 15, 16 and an upper wall 18, provided with a through opening 20. The side walls 14, 16 have protruding runners, 22 and 24 respectively, for allowing the device to be inserted and extracted, just like a drawer, in the appropriate seating (not illustrated) of a coffee machine. The wall 15 has a slot 19 comprising a sloping part and an upper rectilinear part.

A lower closing element of the structure is indicated as a whole with 26 and comprises a plate 28 with lower runners 30, 32 and a central hole 33. A cam surface is integral with the plate 28, and consists of four sloping ramps 34, arranged circumferentially around axis a of the device and arranged one after the other with flat portions 36, 37.

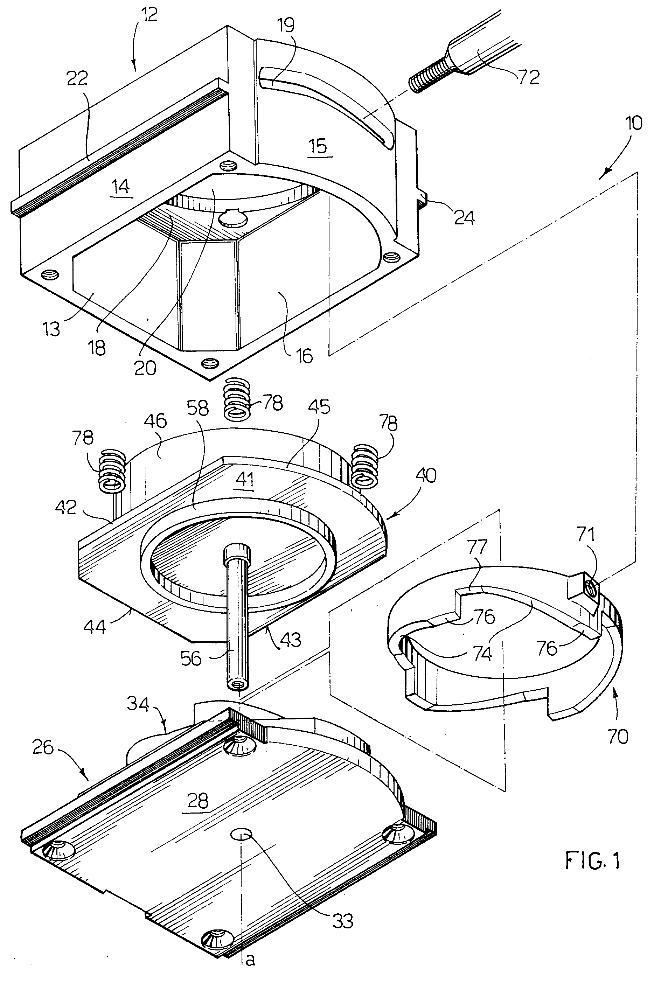

A container-filter holder element (figures 1, 5, 6) is indicated as a whole with 40 and comprises a plate 41 with guide surfaces 42, 43, 44, 45 for a guided sliding movement inside the box 12, along axis a. It also comprises a cylindrical wall 46 with a rounded upper edge 46', which, with the plate 41, defines a container compartment 48; in this is housed a gasket 50. The gasket 50 incorporates a peripheral edge of a perforated filter 52 and has an annular upwardly facing support surface 54. A dispenser duct for the coffee drink, shown with 56, extends from the surface of plate 41 opposite the wall 46, and is in communication with the compartment 48. A cylindrical guide wall 58 centring around the axis a also extends, for a limited length, from the said lower surface of the plate 41.

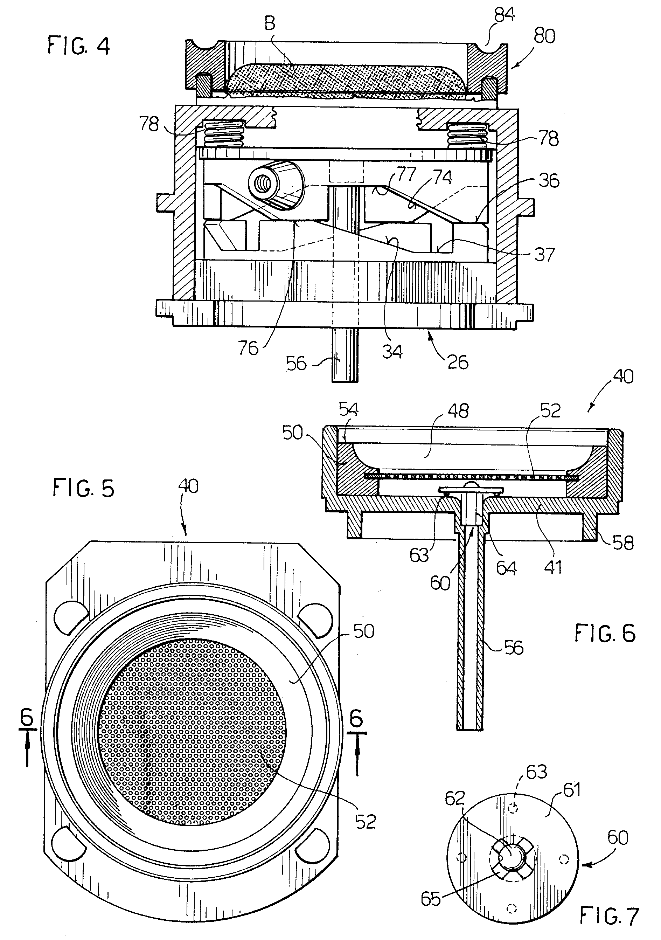

Preferably, between the filter 52 and the duct 56 a refiner-mixer device 60 is interposed, shown in figures 6 and 7, which comprises a plate 61 having a central upper foot 62 and lower peripheral feet 63 and a lower tube 64, of limited length and with a diameter suitable for insertion into the inner passage of duct 56. The longitudinal passage inside the tube 54 opens on the upper side of the plate 61 through four radial openings 65 around the foot 62.

A cylindrical control body, shown with 70, is rotatably mounted around the plate 41 and plate 28, and is made integral, by means of a screw thread 71, to a handle 72 extending through the slot 19 in the structure 12.

The body 70 has lower cam surfaces in the form of four ramps 74 alternating on flat portions 76, 77, the ramps being arranged in such a way that they collaborate with the ramps 34 which are integral with the element 26. The rotation of the body 70 around axis a is guided by the cylinder 58.

Four pressure springs 78 are interposed between the plate 41 and the base 18 of the structure 12.

The invention also comprises a special ring gasket suitable for positioning in a seating in the structure (not shown) of an espresso coffee machine, and for a sealed engagement against the container-filter holder.

Such gasket, indicated with 80, is toric and is made of elastically deformable material, and it comprises a lower circular groove 82 and an upper circular groove 84. The bottom of the lower groove is rounded in section, with a radius approximately corresponding to the corner radius of the upper edge of the cylinder 46; and it has divergent walls. The width of the upper groove 84 is greater than the lower groove and is generally rounded. The depth of the lower groove is almost equal to the height of the free section of the cylinder 46 above the gasket 50.

When the upper edge of the body 46 is received into the groove 82 with slight pressure, the pressure on the base of the latter makes its sides close against the sides of the said cylinder 46, achieving an excellent seal.

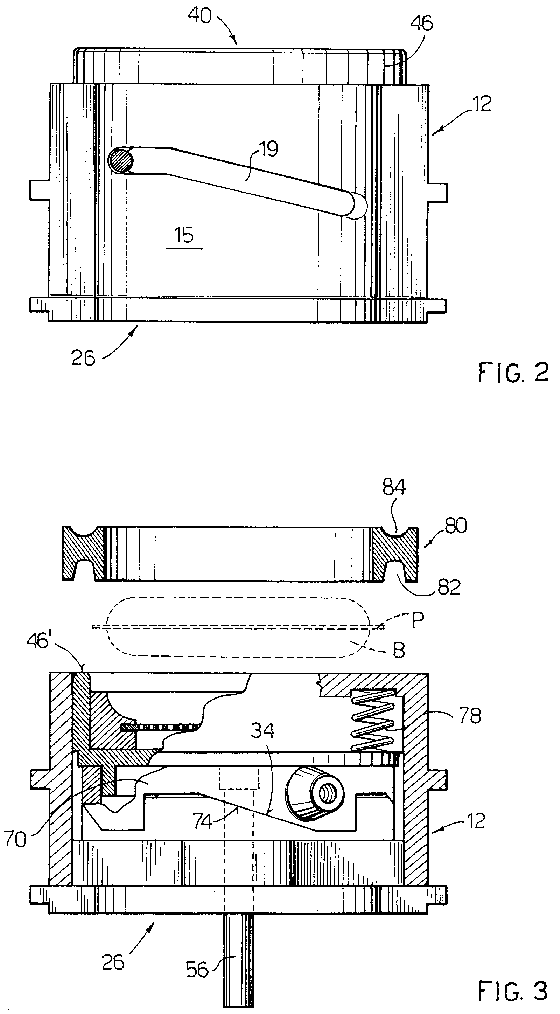

Lastly, in figures 3 and 4, a ground coffee bag B is illustrated, of the type in common use, sealed, with a peripheral tab P formed all the way round it.

A brief description is given below of the operation of the unit.

In the rest position, the drawer element 10 is extracted from the structure of the apparatus. The container-filter holder 40 is lowered and the cam or ramp surfaces 74 and 34 are in contact with each other when the control body 70 and the body 26 are in the approached position. Such position is guaranteed by the action of the spring 78. The handle 72 protrudes from the slot 19 at the lower end of the said slot. In this condition a ground coffee bag B can be positioned in the compartment 48 with its peripheral tab P over the support edge of the gasket 50. The operator then inserts the drawer 10 into appropriate guide runners (not illustrated) in the machine structure and, when it is inserted, he rotates the handle 72 from the lower edge of the slot 19 to the upper end at the left of the latter. In this way, the cylinder 70 is rotated with respect to the plate 26, and the ramps 74 are constrained by the action of the spring to move along the ramps 34, which causes the cylinder 70 to move away from the said ramps, and then the container-filter holder 40 to be lifted up until it engages the gasket 80. This closes against the groove 82 on the edge of the filter holder and, in this way, also locks the peripheral tab of the bag B against the gasket 50 below. Then the hot water dispensing apparatus of the machine (not illustrated and known in itself) can be operated, for dispensing boiling water through the bag. In this way the drink of coffee filtered through the bag passes through the micro-perforated filter 52 and the refiner device 60, which homogenizes it, and it is dispensed through the duct 56. To remove the drawer it is enough to move the control handle 72 in the slot 19 once more to the lowered position and extract the drawer.

## Claims

1. A drawer device for espresso coffee machines, comprising a container-filter holder for ground coffee, characterized in that it comprises:
a box-shaped, drawer structure (12) with an upper open wall (18), side walls (13, 14, 15, 16) and a lower element or part (26);
a container-filter holder device (40) vertically mobile in the said structure between an upper closing or working position and a lower open or loading position and comprising: a compartment (48), defined by a wall (46) and a base plate (41), and dispenser duct (56) for the coffee drink;
a control unit for the vertical movement of the container-filter holder (40), the said control unit comprising cam surfaces (34) fixed to the said lower element (26) of the box structure and a rotating control body (70), with cam surfaces (74) facing the said cam surfaces (34) and with its rotation controlled from outside by raising and/or lowering the filter holder device.

2. A device according to claim 1, further comprising elastic means interposed for pressing the said container-filter holder (40) against the said control body (70), and the said cam surfaces (74, 34) into contact with each other.

3. A unit according to claim 1, characterized in that the said cam surfaces consist of sloping ramps (74, 34) alternating with flat portions (76, 77, 36, 37) and the control means is a handle (72) integral with the rotating cylinder and extending through a slot (19) in a wall (15) of the drawer structure (12).

4. A device according to claim 1, characterized in that the container-filter holder (40) comprises a cylinder-shaped guide extension (58) for the control cylinder (70).

5. A device according to claim 1, characterized in that in the compartment (48) for the coffee a gasket (50) is received, which holds a perforated filter (52).

6. A device according to claim 1, characterized in that it comprises an upper gasket (80) for collaborating with a rounded upper border (46'), the said gasket having a lower circular groove (82) and an upper circular groove (84).

7. A device according to claim 5, characterized in that the lower groove (82) has a rounding off on the base with a radius corresponding to the corner radius of the upper edge of the cylinder (46) of the filter holder, and walls diverging toward the bottom.

8. A device according to claim 1, comprising a refiner device (60) downstream from the filter, the said refiner device comprising a tube (64) for inserting into the dispenser duct (56), and a disk (61) provided with feet (53) and radial passages (65) between the upper surface of the disk and the axial passage of the tube.
